# EUROPÄISCHE PATENTSCHRIFT

(11) **EP 2 781 384 B1**
(45) Veröffentlichungstag und Bekanntmachung des Hinweises auf die Patenterteilung: **17.10.2018**
(21) Anmeldenummer: 14152040.3
(22) Anmeldetag: 22.01.2014
(51) Int. Cl.: B60H 3/06, B60H 1/00

(54) **Gebläseanordnung für Kabinenfiltration**
Fan assembly for cabin filtration
Système de ventilateur pour filtration de cabine

(30) Priorität: 21.03.2013 DE 102013102872
(43) Veröffentlichungstag der Anmeldung: 24.09.2014
(73) Patentinhaber: CLAAS Selbstfahrende Erntemaschinen GmbH, 33428 Harsewinkel (DE)
(72) Erfinder: Vennemann, Hendrik, 59399 Olften (DE); Bultschnieder, Ralf, 33378 Rhed-Wiedenbrück (DE)

(56) Entgegenhaltungen:
- DE-A1- 2 937 215
- GB-A- 1 163 480
- US-A- 4 072 487

## Beschreibung

Die Erfindung betrifft eine Gebläseanordnung zur für eine Kabinenfiltration für eine Kraftfahrzeugkabine, insbesondere für landwirtschaftliche Kraftfahrzeuge, sowie ein Verfahren zum Reinigen von Filterelementen für eine Kraftfahrzeugkabine, wie in DE 29 37 215 A offenbart.

Kraftfahrzeuge, insbesondere landwirtschaftliche Kraftfahrzeuge, weisen heute üblicherweise eine Kraftfahrzeugkabine für einen Bediener auf. Eine Belüftung der Kraftfahrzeugkabine erfolgt dabei häufig über ein Frischluftgebläse, wobei dem Frischluftgebläse ein Filter, beispielsweise ein Papier- oder Vliesfilter, zur Reinigung der angesaugten Frischluft vorgeschaltet sein kann. Bei zunehmender Betriebsdauer setzen sich Filter mit Verunreinigungen in der Frischluft, beispielsweise Staub, zu, wodurch eine Druckdifferenz über den Filter zunimmt und die angesaugte Frischluftmenge abnimmt. Die reduzierte Frischluftmenge, die in die Kraftfahrzeugkabine eingeleitet wird, kann zu einer Ermüdung und erhöhter Belastung des Bedieners führen.
Es ist daher die Aufgabe der Erfindung eine Gebläseanordnung für eine Kabinenfiltration bereitzustellen, die ein vermindertes Zusetzten des Filters und eine verbesserte Aufrechterhaltung eines Frischluftstromes ermöglicht. Zudem soll ein Verfahren zum Reinigen von Filterelementen für eine Kraftfahrzeugkabine bereitgestellt werden, das ein vermindertes Zusetzen des Filters ermöglicht.
Die Lösung der Aufgabe erfolgt erfindungsgemäß durch die Merkmale des Anspruches 1. Vorteilhafte Ausgestaltungen der Erfindung sind in den Unteransprüchen angegeben.
Eine erfindungsgemäße Gebläseanordnung für eine Kabinenfiltration für eine Kraftfahrzeugkabine mit mindestens einem, innerhalb eines Aufnahmegehäuses angeordneten Gebläse zur Erzeugung einer Druckdifferenz zwischen einer Ansaugseite und einer Druckseite, wobei das Aufnahmegehäuse druckseitig eine Ausblasöffnung und zur fluiddurchlässigen Verbindung des Gebläses mit mindestens einem ersten und einem zweiten Filterelement mindestens eine erste und eine zweite Ansaugöffnung aufweist. Erfindungsgemäß ist das mindestens eine Gebläse in einem verschwenkbar in dem Aufnahmegehäuse aufgenommenen Einsatz angeordnet, wobei der Einsatz zwischen einer Betriebsposition und mindestens einer ersten Reversierposition und/oder einer zweiten Reversierposition verschwenkbar ist, wobei in der ersten und/oder der zweiten Reversierposition des Einsatzes das erste und/oder das zweite Filterelement fluiddurchlässig mit der Druckseite des Gebläses verbunden und mit einem Druck beaufschlagbar ist.

Die Gebläseanordnung kann als Fahrzeugkabinengebläseanordnung ausgebildet sein und für eine Zufuhr von Frischluft zu einer Kraftfahrzeugkabine, insbesondere eines landwirtschaftlichen Kraftfahrzeuges, vorgesehen sein. Die Kraftfahrzeugkabine kann ein zur Aufnahme der Gebläseanordnung ausgebildetes Kabinendach aufweisen, wobei die Gebläseanordnung innerhalb des Kabinendaches angeordnet und mit innerhalb des Kabinendaches angeordneten Lüftungselementen, beispielsweise Lüftungskanälen, verbunden sein kann. Die Gebläseanordnung kann in einem Gehäuse aufgenommen sein, welches beispielsweise lösbar mit, insbesondere dem Kabinendach, der Kraftfahrzeugkabine verbunden sein kann. Die Gebläseanordnung kann ein Aufnahmegehäuse aufweisen, in welchem mindestens ein Gebläse angeordnet sein kann. Das Aufnahmegehäuse kann im Wesentlichen zylindrisch ausgebildet sein und einen im Wesentlichen runden, vorzugsweise kreisrunden, Querschnitt und/oder Boden aufweisen. Das Aufnahmegehäuse kann sich nach radial außenseitig erstreckende Befestigungslaschen aufweisen, wobei die Befestigungslaschen senkrecht und/oder parallel zur Längserstreckung des Aufnahmegehäuses ausgebildet sein können. Das mindestens eine Gebläse kann in einem verschwenkbar in dem Aufnahmegehäuse aufgenommenen Einsatz angeordnet sein, wobei das Gebläse an einem wandförmigen Halteelement des Einsatzes derart befestigt sein kann, dass das Gebläse im Betrieb eine Druckdifferenz zwischen einer Druckseite und einer Ansaugseite, insbesondere über das Halteelement, innerhalb des Einsatzes und/oder des Aufnahmegehäuses bewirken kann. Der Einsatz kann im Wesentlichen zylindrisch ausgebildet sein und kann eine zumindest teilweise umfänglich, entlang seines Umfangs, ausgebildete Wandung mit einer Mantelfläche aufweisen, wobei die Mantelfläche des Einsatzes das Aufnahmegehäuse innenseitig kontaktieren kann. Die Wandung des Einsatzes kann fluiddicht, insbesondere einstückig, mit dem wandförmigen Halteelement ausgebildet sein, wobei die Mantelfläche in eine, insbesondere druckseitige, Oberfläche des Halteelementes übergehen kann. Um ansaugseitig und druckseitig jeweils mindestens das Passieren eines Luftstromes zu ermöglichen, kann die Wandung des Einsatzes teilweise entlang des Umfanges und/oder entlang seiner Längserstreckung ausgebildet sein und/oder Ausnehmungen aufweisen. Der Einsatz kann mittels eines, insbesondere regelbaren, Schwenkantriebs um eine Drehachse verschwenkbar gelagert sein. Der Schwenkantrieb kann in Form eines Elektromotors, insbesondere mit einem Exzenter zur Übersetzung einer Drehbewegung in eine Schwenkbewegung, ausgebildet sein. Die Druckseite des Gebläses kann über eine in dem Aufnahmegehäuse ausgebildete Ausblasöffnung fluiddurchlässig mit der Kraftfahrzeugkabine zur Zufuhr von Frischluft verbunden sein, wobei die Ausblasöffnung teilumfänglich in dem Aufnahmegehäuse ausgebildet sein kann. Ansaugseitig kann das Gebläse über mindestens eine erste Ansaugöffnung mit mindestens einem ersten Filterelement und über eine zweite Ansaugöffnung mit einem zweiten Filterelement fluiddurchlässig verbunden sein. Die erste und zweite Ansaugöffnung können teilumfänglich in dem Aufnahmegehäuse ausgebildet sein und beispielsweise zu der Ausblasöffnung symmetrisch zueinander angeordnet sein.

In einer Betriebsposition kann der Einsatz in einer unverschwenkten Position ausgerichtet sein, wobei das Gebläse ansaugseitig über die erste Ansaugöffnung fluiddurchlässig mit dem ersten Filterelement und über die zweite Ansaugöffnung mit dem zweiten Filterelement verbunden sein kann, wobei Frischluft in einer ersten Strömungsrichtung durch das erste und zweite Filterelement strömen kann. Druckseitig kann das Gebläse über die Ausblasöffnung fluiddurchlässig mit der Kraftfahrzeugkabine verbunden sein. In einer ersten Reversierposition kann der Einsatz derart verschwenkt sein, dass das mindestens erste Filterelement mit der Druckseite des Gebläses fluiddurchlässig verbunden und mit einem Druck beaufschlagbar ist und das zweite Filterelement mit der Ansaugseite des Gebläses fluiddurchlässig verbunden ist. Dadurch kann die durch das zweite Filterelement angesaugte Luft zumindest teilweise in einer der ersten Strömungsrichtung entgegengesetzten zweiten Strömungsrichtung durch das erste Filterelement geleitet werden, wodurch eine Reinigung des ersten Filterelementes bewirkt werden kann. In einer zweiten Reversierposition kann der Einsatz, insbesondere entgegen der Verschwenkrichtung der ersten Reversierposition, derart verschwenkt sein, dass das zweite Filterelement mit der Druckseite des Gebläses fluiddurchlässig verbunden und mit einem Druck beaufschlagbar ist und das mindestens erste Filterelement mit der Ansaugseite des Gebläses fluiddurchlässig verbunden ist. Dadurch kann die durch das erste Filterelement angesaugte Luft zumindest teilweise in der zweiten Strömungsrichtung durch das zweite Filterelement geleitet werden, wodurch eine Reinigung des zweiten Filterelementes bewirkt werden kann. Der Einsatz kann derart ausgebildet und verschwenkbar angeordnet sein, dass in der ersten und/oder zweiten Reversierposition die Ausblasöffnung zumindest teilweise durch ein Verdrehen des Einsatzes verschließbar ist, wobei die Ausblasöffnung zumindest teilweise durch eine Wandung des Einsatzes abgedeckt werden kann. Dadurch kann der druckseitige Luftstrom des Gebläses vollständig zur Reinigung des mit der Druckseite des Gebläses verbundenen Filterelementes genutzt werden. In der ersten und/oder der zweiten Reversierposition des Einsatzes kann die Ausblasöffnung fluiddurchlässig mit der Druckseite des Gebläses verbunden sein, wodurch zumindest ein Teil des druckseitigen Luftstromes des Gebläses der Kraftfahrzeugkabine zugeführt werden kann. Die Drehachse der Gebläseanordnung kann im Wesentlichen lotrecht zum Boden, beispielsweise senkrecht zu einem Boden des Gehäuses und/oder der flächigen Erstreckung des Kabinendaches, angeordnet sein, wodurch eine flachere Konstruktion der Gebläseanordnung und eine Aufnahme in flachen Kabinendächern ermöglicht werden kann.

Vorteilhaft bei der erfindungsgemäßen Ausgestaltung der Gebläseanordnung ist, dass durch ein Verschwenken des Einsatzes mit dem darin angeordneten Gebläse aus der Betriebsposition in die erste und/oder zweite Reversierposition das erste Filterelement und/oder das zweite Filterelement mit der Druckseite des Gebläses verbindbar sind, wodurch der druckseitige Luftstrom des Gebläses zumindest teilweise entgegen der Strömungsrichtung in der Betriebsposition durch das jeweilige Filterelement hindurchgeleitet werden kann. Durch die vorübergehende Umkehr der Luftströmung durch das jeweilige Filterelement in der ersten und/oder der zweiten Reversierposition kann eine Reinigung der Filterelemente bewirkt werden, wodurch die Filterstandzeiten erhöht und der Wartungsaufwand verringert werden können. Somit kann ein Zusetzten des mindestens ersten und zweiten Filterelementes vermindert werden und dadurch und die Aufrechterhaltung des Frischluftstromes für die Kraftfahrzeugkabine verbessert werden.

Bevorzugt ist vorgesehen, dass das Aufnahmegehäuse mindestens eine erste und ein zweite Reversieröffnung aufweist, über welche die Druckseite des Gebläses fluiddurchlässig mit dem mindestens ersten und/oder zweiten Filterelement verbindbar ist. Die mindestens erste Reversieröffnung kann in der ersten Reversierposition des Einsatzes die Druckseite des Gebläses fluiddurchlässig mit dem ersten Filterelement verbinden. Die erste Ansaugöffnung kann beispielsweise durch die Mantelfläche des in die erste Reversierposition verschwenkten Einsatzes, insbesondere fluiddicht, verschlossen sein. Die zweite Reversieröffnung kann in der zweiten Reversierposition des Einsatzes die Druckseite des Gebläses fluiddurchlässig mit dem zweiten Filterelement verbinden. Die zweite Ansaugöffnung kann beispielsweise durch die Mantelfläche des in die erste Reversierposition verschwenkten Einsatzes, insbesondere fluiddicht, verschlossen sein. In der Betriebsposition des Einsatzes können die erste und die zweite Reversieröffnung beispielsweise durch die Mantelfläche des Einsatzes bei gleichzeitig geöffneter ersten und zweiter Ansaugöffnung, insbesondere fluiddicht, verschlossen sein. Die erste und die zweite Reversieröffnung kann zumindest teilweise umfänglich in dem Aufnahmegehäuse ausgebildet sein. Die erste und/oder zweite Reversieröffnung kann in Umfangsrichtung zwischen der Ausblasöffnung und der ersten und/oder zweiten Ansaugöffnung angeordnet sein. Die erste und/oder zweite Reversieröffnung ermöglicht durch ihre jeweilige Anordnung benachbart zu der Ausblasöffnung eine fluiddurchlässige Verbindung der Druckseite des Gebläses mit dem jeweiligen Filterelement mit einer verringerten Schwenkbewegung.

In einer besonders bevorzugten Ausgestaltung der Erfindung ist der Einsatz kontinuierlich und/oder diskontinuierlich zwischen der Betriebsposition und/oder der ersten und/oder zweiten Reversierposition verschwenkbar ausgebildet. Der Einsatz mit dem Gebläse kann kontinuierlich mit einer konstante und/oder variablen Frequenz verschwenkbar, insbesondere zum wechselseitigen Reinigen des ersten und/oder zweiten Filterelementes, ausgebildet sein. Das kontinuierliche und/oder diskontinuierliche Verschwenken des Einsatzes kann manuell und/oder automatisiert aktiviert werden, beispielsweise abhängig von einem in der Betriebsposition gemessenen ansaugseitigen und/oder druckseitigen Druck, wodurch auf eine benötigte Reinigung der Filterelemente geschlossen werden kann. Durch das kontinuierliche und/oder diskontinuierliche Verschwenken kann ein Zusetzen der Filterelemente verringert werden, wodurch die Filterstandzeit weiter erhöht werden kann.

Weiterhin ist nach einer bevorzugten Ausgestaltung vorgesehen, dass ein Schwenkwinkel des Einsatzes von der Betriebsposition in die erste und/oder zweite Reversierposition von 15 Grad, vorzugsweise 30 Grad, besonders bevorzugt 33 Grad, bis 90 Grad, bevorzugt 60 Grad, besonders bevorzugt 45 Grad, beträgt. Der Einsatz ist in der Betriebsposition unverschwenkt, wobei der Schwenkwinkel des Einsatzes in der Betriebsposition im Wesentlichen 0 Grad beträgt. Der Einsatz kann in Richtung der ersten und der zweiten Reversierposition gleichweit oder unterschiedlich weit verschwenkt werden. Der Schwenkwinkel des Einsatzes kann durch einen Anschlag, gegen den der Einsatz schwenkt, begrenzt werden. Der Schwenkwinkel des Einsatzes von der Betriebsposition in die erste und/oder zweite Reversierposition kann, insbesondere in einem Bereich von, 15 Grad, vorzugsweise 30 Grad, besonders bevorzugt 33 Grad, bis 90 Grad, bevorzugt 60 Grad, besonders bevorzugt 45 Grad, betragen.

Ferner ist bevorzugt vorgesehen, dass der Einsatz druckseitig ein Trennelement aufweist, wodurch der Luftstrom des Gebläses druckseitig in einen ersten und einen zweiten Teilluftstrom trennbar ist. Das Trennelement kann in der druckseitigen Strömung des Gebläses im Wesentlichen parallel oder rechtwinklig zur Drehachse des Einsatzes angeordnet sein. Das Trennelement kann im Wesentlichen mittig oder außermittig in der druckseitigen Strömung des Gebläses angeordnet sein, wobei ein im Wesentlicher gleichgroßer oder unterschiedlich großer erster und zweiter druckseitiger Teilluftstrom ausgebildet werden können. Der erste Teilluftstrom kann in der ersten Reversierposition dem ersten Filterelement und der zweite Teilluftstrom der Ausblasöffnung zugeordnet sein. Der zweite Teilluftstrom kann in der zweiten Reversierposition dem zweiten Filterelement und der erste Teilluftstrom der Ausblasöffnung zugeordnet sein. In der Betriebsposition können der erste und der zweite Teilluftstrom der Ausblasöffnung zugeordnet sein. Das Trennelement kann einstückig mit dem Halteelement ausgebildet sein, und sich beispielsweise achsparallel entlang der gesamten Länge des Einsatzes erstrecken. Radial außenseitig kann das Trennelement das Aufnahmegehäuse innenseitig kontaktieren.

In einer besonders bevorzugten Ausgestaltung der Erfindung ist eine Querschnittsfläche der ersten und/oder zweiten Reversieröffnung größer, gleichgroß oder kleiner als eine Querschnittsfläche eines durchströmbaren Bereiches der Ausblasöffnung, insbesondere in der ersten und/oder zweiten Reversierposition. In der ersten und/oder zweiten Reversierposition kann durch das Verschwenken des Einsatzes die von dem fluid durchströmbare Querschnittsfläche der Ausblasöffnung zumindest teilweise durch die Mantelfläche des Einsatzes verschlossen sein, wobei der durchströmbare Bereich der Ausblasöffnung von der verschwenkten Position des Einsatzes abhängig sein kann. Die durchströmbare Querschnittsfläche, insbesondere in der ersten und/oder zweiten Reversierposition, kann größer, gleichgroß oder kleiner sein als die Querschnittsfläche der ersten und/oder zweiten Reversieröffnung. Durch die gleich oder unterschiedlich großen Querschnittsflächen können die jeweiligen Volumenströme und/oder das Verhältnis der Volumenströme zueinander eingestellt werden. Beispielsweise können bei gleichgroßen Querschnittsflächen im Wesentlichen gleichgroße Volumenströme an Frischluft durch die Ausblasöffnung und die erste und/oder zweite Reversieröffnung geleitet werden und bei unterschiedlich großen Querschnittsflächen entsprechend unterschiedlich große Volumenströme. Dadurch ist, insbesondere in Abhängigkeit der Verschwenkung des Einsatzes, die Menge an Frischluft einstellbar, die zu einem zu reinigenden ersten und/oder zweiten Filterelement und beispielsweise der Kraftfahrzeugkabine geleitet wird.

In einer bevorzugten Ausgestaltung der Erfindung sind die erste und/oder zweite Reversieröffnung mit der Ausblasöffnung gemeinsam ausgebildet. Die Ausblasöffnung und die erste und/oder zweite Reversieröffnung können in Form einer einzelnen Öffnung in dem Aufnahmegehäuse mit einer gemeinsamen Querschnittsfläche ausgebildet sein. Durch die verringerte Anzahl an Durchbrüchen in dem Aufnahmegehäuse können die Herstellungskosten des Aufnahmegehäuses, beispielsweise bei einem Kunststoff-Spritzgussteil durch ein vereinfachte Form, verringert werden.

In einer bevorzugten Ausgestaltung der Erfindung ist das Gebläse ein Axialgebläse und/oder ein Radialgebläse. Weiter bevorzugt ist mindestens ein zweites Gebläse vorgesehen. Das erste und das zweite Gebläse können nebeneinander, achsparallel oder unter einem Achswinkel zueinander in dem Einsatz angeordnet sein. Die Gebläse können gleicher oder unterschiedlicher Leistung und/oder Bauart, beispielsweise axial und/oder radial, sein. Das erste und zweite Gebläse können gemeinsam oder individuell regelbar sein, wodurch unterschiedliche Teilluftströme einstellbar sind, beispielsweise in der ersten und/oder zweiten Reversierposition.

Die Erfindung betrifft ferner ein landwirtschaftliches Kraftfahrzeug mit mindestens einer wie zuvor beschriebenen aus- und weitergebildeten Gebläseanordnung. Mit Hilfe der erfindungsgemäßen Gebläseanordnung kann eine vorübergehende Umkehr der Luftströmung durch das jeweilige Filterelement in der ersten und/oder der zweiten Reversierposition zur Reinigung der Filterelemente bewirkt werden, wodurch die Frischluftversorgung der Kraftfahrzeugkabine verbessert werden kann.

Die Erfindung betrifft ferner ein Verfahren zum Reinigen von mindestens einem ersten und einem zweiten Filterelement für eine Kraftfahrzeugkabine, insbesondere mit einer wie zuvor beschriebenen aus- und weitergebildeten Gebläseanordnung. Erfindungsgemäß wird durch Verschwenken eines Einsatzes mit mindestens einem Gebläse von einer Betriebsposition in eine erste und/oder zweite Reversierposition das erste und/oder zweite Filterelement mit der Druckseite des Gebläses verbunden, wobei zumindest ein Teilluftstrom des Gebläses das erste und/oder zweite Filterelement zur Reinigung durchströmt.

In einem um eine Drehachse verschwenkbar in einem Aufnahmegehäuse angeordneten Einsatz kann mindestens ein Gebläse angeordnet sein, wobei das Gebläse im Betrieb zwischen seiner Ansaugseite und seiner Druckseite eine Druckdifferenz bewirken kann. Der Einsatz mit dem Gebläse kann durch Verschwenken von einer Betriebsposition in einer erste und/oder zweite Reversierposition verbracht werden. Das Verschwenken des Einsatzes von der Betriebsposition in die erste oder zweite Reversierposition kann mit einem gleich oder unterschiedlich großen Schwenkwinkel erfolgen. In der Betriebsposition kann die Druckseite des Gebläses fluiddurchlässig über eine Ausblasöffnung des Aufnahmegehäuses beispielsweise mit einer Kraftfahrzeugkabine verbunden sein, und die Ansaugseite des Gebläses kann über mindestens eine erste Ansaugöffnung mit mindestens einem ersten Filterelement und über eine zweite Ansaugöffnung mit einem zweiten Filterelement fluiddurchlässig verbunden sein, wobei die Frischluft in einer ersten Strömungsrichtung durch die Filterelemente gefördert werden kann. Dadurch kann Frischluft angesaugt und durch das mindestens erste und das zweite Filterelement gereinigt werden, bevor die gereinigte Frischluft beispielsweise in die Kraftfahrzeugkabine weitergeleitet werden kann.

In der mindestens ersten Reversierposition kann das mit dem Einsatz verschwenkte mindestens eine Gebläse ansaugseitig fluiddurchlässig mit dem zweiten Filterelement und druckseitig zumindest mit dem ersten Filterelement fluiddurchlässig verbunden werden, wodurch das erste Filterelement mit einem Druck beaufschlagt werden kann, wobei Frischluft, welche in die erste Strömungsrichtung durch das zweite Filterelement angesaugt wurde, in eine der ersten Strömungsrichtung entgegengesetzte zweite Strömungsrichtung durch das erste Filterelement hindurchgeleitet werden kann. Dadurch kann in der ersten Reversierposition die Strömungsrichtung der Luft durch das erste Filterelement umgekehrt werden, wodurch eine Reinigung des ersten Filterelementes ermöglicht werden kann. In der ersten Reversierposition kann ein zumindest teilweises Verschließen der Ausblasöffnung durch ein Verdrehen des Einsatzes erfolgen, wobei die Ausblasöffnung zumindest teilweise durch eine Wandung des Einsatzes abgedeckt werden kann. Durch Verschließen der Ausblasöffnung kann der druckseitige Luftstrom vollständig zu dem ersten Filterelement geleitet werden und ausschließlich zum Reinigen verwendet werden, wodurch die Reinigung des ersten Filterelementes verbessert werden kann. Die Druckseite des mindestens einen Gebläses kann in der ersten Reversierposition über die erste Ansaugöffnung fluiddurchlässig mit dem ersten Filterelement verbunden werden.

In der zweiten Reversierposition kann das mit dem Einsatz verschwenkte mindestens eine Gebläse ansaugseitig fluiddurchlässig mit dem ersten Filterelement und druckseitig mit dem zweiten Filterelement fluiddurchlässig verbunden werden, wodurch das zweite Filterelement mit einem Druck beaufschlagt werden kann, wobei Frischluft, welche in die erste Strömungsrichtung durch das erste Filterelement angesaugt wurde, in die zweite Strömungsrichtung durch das zweite Filterelement hindurchgeleitet werden kann. Dadurch kann in der zweiten Reversierposition die Strömungsrichtung der Luft durch das zweite Filterelement umgekehrt werden, wodurch eine Reinigung des zweiten Filterelementes ermöglicht werden kann. In der zweiten Reversierposition kann ein zumindest teilweises Verschließen der Ausblasöffnung durch ein Verdrehen des Einsatzes erfolgen, wobei die Ausblasöffnung zumindest teilweise durch eine Wandung des Einsatzes abgedeckt werden kann. Durch Verschließen der Ausblasöffnung kann der druckseitige Luftstrom vollständig zu dem zweiten Filterelement geleitet werden und ausschließlich zum Reinigen verwendet werden, wodurch die Reinigung des zweiten Filterelementes verbessert werden kann. Die Druckseite des mindestens einen Gebläses kann in der zweiten Reversierposition über die zweite Ansaugöffnung fluiddurchlässig mit dem zweiten Filterelement verbunden werden. Durch das Verschwenken des Einsatzes mit dem Gebläse kann das Reinigen des mindestens ersten und zweiten Filterelementes verbessert werden, wodurch ein vermindertes Zusetzen der Filterelement ermöglicht werden kann.

In einer bevorzugten Ausgestaltung des Verfahrens wird in der ersten und/oder zweite Reversierposition ein Teilluftstrom der Ausblasöffnung zugeführt und ein Teilluftstrom dem ersten und/oder zweiten Filterelement zum Reinigen zugeführt. Das Verschwenken des Einsatzes von der Betriebsposition in die erste und/oder zweite Reversierposition kann derart erfolgen, dass die über ein Filterelement angesaugte Frischluft druckseitig teilweise an das andere Filterelement und teilweise an die Ausblasöffnung geleitet werden kann. In der ersten Reversierposition kann das zweite Filterelement mit der Ansaugseite und das erste Filterelement und die Ausblasöffnung mit der Druckseite des Gebläses fluiddurchlässig verbunden werden. In der zweiten Reversierposition kann das erste Filterelement mit der Ansaugseite und das zweite Filterelement und die Ausblasöffnung mit der Druckseite des Gebläses fluiddurchlässig verbunden werden. Durch das im Wesentlichen kontinuierliche Zuführen zumindest eines Teilluftstromes zu der Ausblasöffnung kann eine im Wesentlichen kontinuierliche Versorgung der Kraftfahrzeugkabine mit gefilterter Frischluft ermöglicht werden. In der ersten und/oder zweiten Reversierposition kann das erste und/oder zweite Filterelement über eine erste und/oder zweite Reversieröffnung fluiddurchlässig mit der Druckseite des Gebläses verbunden werden. In der ersten Reversierposition kann ein erster Teilluftstrom durch die erste Reversieröffnung zu dem ersten Filterelement und ein zweiter Teilluftstrom durch die Ausblasöffnung strömen. In der zweiten Reversierposition kann der zweite Teilluftstrom durch die zweite Reversieröffnung zu dem zweiten Filterelement und der erste Teilluftstrom durch die Ausblasöffnung strömen. Ansaugseitig können die Filterelemente über die jeweilige Ansaugöffnung mit der Ansaugseite des Gebläses fluiddurchlässig verbunden werden.
Der erste Teilluftstrom und der zweite Teilluftstrom können gleich oder unterschiedlich groß eingestellt werden, beispielsweise durch ein entsprechend weites Verschwenken des Einsatzes und/oder durch Auswahl gleich oder unterschiedlich großer durchströmbarer Querschnitte der Reversieröffnung und der Ausblasöffnung.

Weiter bevorzugt erfolgt das Verschwenken zwischen der Betriebsposition und der ersten und/oder zweiten Reversierposition kontinuierlich und/oder diskontinuierlich. Das Verschwenken des Einsatzes um die Drehachse kann manuell und/oder automatisch gestartet werden, wobei ein automatisches Starten basierend auf dem Messen und Vergleichen von einem oder mehreren Parametern, beispielsweise eine Druckdifferenz über das Gebläse, erfolgen kann. Das Verschwenken kann kontinuierlich und/oder diskontinuierlich, beispielsweise nach Bedarf, wechselseitig zwischen der Betriebsposition und der ersten und/oder zweiten Reversierposition erfolgen. Dies ermöglicht ein kontinuierliches und/oder bedarfsangepasstes Reinigen der Filterelemente.

Besonders bevorzugt wird die Drehzahl des mindestens einen Gebläses in der ersten und/oder zweiten Reversierposition gegenüber der Betriebsposition angehoben. Die Drehzahl des mindestens einen Gebläses kann in der ersten und/oder zweiten Reversierposition im Vergleich zu der Drehzahl in der Betriebsposition erhöht werden. Die Drehzahl in der ersten und/oder zweiten Reversierposition kann gleich oder unterschiedlich angehoben werden, beispielsweise abhängig von einem gemessenen Parameter, wie einer Druckdifferenz, zum Bestimmen des Verschmutzungsgrades des betreffenden Filterelementes und der daraus benötigten Frischluftmenge und/oder Druck zum Reinigen des Filterelementes. Weist die Gebläseanordnung in dem Einsatz mehrere Gebläse auf, können die Drehzahlen der Gebläse gemeinsam und/oder individuell geregelt werden. Durch das Anheben der Drehzahl des Gebläses kann bei einem Verschwenken des Einsatzes der Druck und/oder Volumenstrom der in die Kraftfahrzeugkabine zugeführten Frischluft im Wesentlichen konstant gehalten werden.

Nachfolgend wird die Erfindung unter Bezugnahme auf die anliegenden Zeichnungen näher erläutert.

Es zeigen:
Fig. 1: eine perspektivische Darstellung einer erfindungsgemäßen Gebläseanordnung;
Fig. 2: eine Ansicht der in fig. 1 gezeigten Gebläseanordnung in einer Betriebsposition;
Fig. 3: eine Ansicht der Gebläseanordnung aus Fig. 1 in einer ersten Reversierposition; und
Fig. 4: eine Ansicht der in Fig. 1 gezeigten Gebläseanordnung in einer zweiten Reversierposition.

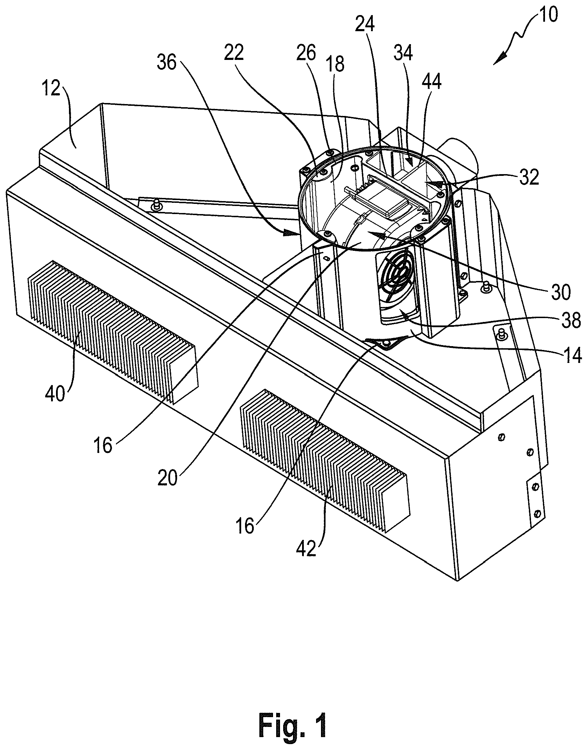

In Fig. 1 ist eine erfindungsgemäße Gebläseanordnung 10 für eine Kabinenfiltration für eine Kraftfahrzeugkabine dargestellt. Die Gebläseanordnung 10 kann beispielsweise für ein landwirtschaftliches Kraftfahrzeug, wie einen Mähdrescher, Häcksler oder Traktor, zur Reinigung der einer Kraftfahrzeugkabine zugeführten Frischluft verwendet werden. Die Gebläseanordnung 10 umfasst ein in einem Gehäuse 12 angeordnetes Aufnahmegehäuse 14, wobei das Aufnahmegehäuse 14 eine im Wesentlichen zylindrische Form aufweist. Das Aufnahmegehäuse 14 ist bodenseitig offen und an dem Gehäuse 12 mit Befestigungslaschen 16 über Schraubverbindungen befestigt. In dem Aufnahmegehäuse 14 ist ein um eine Drehachse verschwenkbarer Einsatz 18 angeordnet, in welchem ein Gebläse 20 in Form eines Radiallüfters aufgenommen ist. Der Einsatz 18 kann bodenseitig geöffnet sein und an einem dem Boden gegenüberliegenden Ende mit einem Deckel 22 verschließbar sein, wobei der Deckel 22 in radialer Richtung zumindest teilweise mit dem Aufnahmegehäuse 14 überlappt. Das Gebläse 20 ist innerhalb des Einsatzes 18 an einem wandförmigen Halteelement 24 angeordnet, wobei das Halteelement 24 einstückig mit einer teilumfänglich ausgebildeten Wandung 26 des Einsatzes 18 ausgebildet ist. Die Wandung 26 des Einsatzes weist radial außenseitig eine Mantelfläche 28 auf. Das Gebläse 20 erzeugt innerhalb des Einsatzes 18 im Betrieb eine Druckdifferenz über das Halteelement 24 zwischen seiner Ansaugseite 30 und seiner Druckseite 32, wobei die Druckseite 32 des Gebläses 20 mit einer in dem Aufnahmegehäuse 14 ausgebildeten Ausblasöffnung 34 verbunden ist. Das Gebläse 20 ist über eine in dem Aufnahmegehäuse 14 ausgebildete erste Ansaugöffnung 36 und/oder zweite Ansaugöffnung 38 fluiddurchlässig mit einem ersten Filterelement 40 und/oder einem zweiten Filterelement 42 verbunden, wobei das erste und das zweite Filterelement 40,42 außerhalb des Aufnahmegehäuses 14 fluidundurchlässig voneinander angeordnet sind. An der Druckseite 32 des Gebläses 20 ist einstückig an dem Haltelement 24 ein Trennelement 44 ausgebildet, welches den druckseitigen Luftstrom des Gebläses 20 teilt. Das Trennelement 44 ist dabei entlang der gesamten Längserstreckung des Einsatzes 18 entlang der Drehachse ausgebildet.

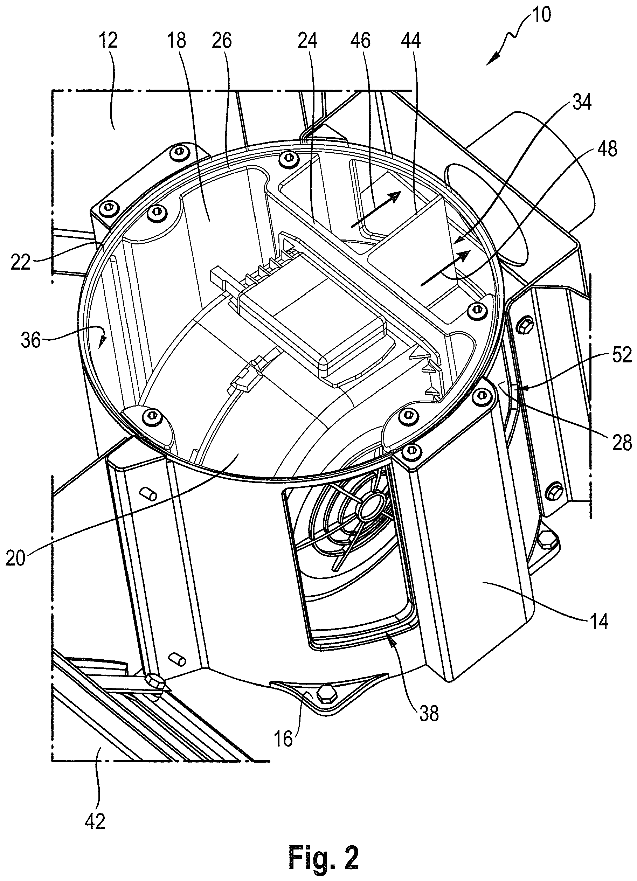

Der durch das Trennelement 44 geteilte druckseitige Luftstrom des Gebläses 20 weist zwei im Wesentlichen gleichgroße Teilluftströme, einen ersten Teilluftstrom 46 und einen zweiten Teilluftstrom 48, auf (Fig. 2). In einer Betriebsposition der Gebläseanordnung 10 ist die Ansaugseite 30 des Gebläses 20 über die ersten und zweite Ansaugöffnung 36,38 fluiddurchlässig mit dem ersten und zweiten Filterelement 40,42 verbunden, so dass Frischluft durch die Filterelemente in einer ersten Strömungsrichtung angesaugt und gereinigt werden kann. Die Druckseite 32 des Gebläses 20 ist fluiddurchlässig mit der Ausblasöffnung 34 verbunden, so dass der erste und der zweite Teilluftstrom 46,48 über die Ausblasöffnung 34 der Kraftfahrzeugkabine zugeführt werden können. Das Aufnahmegehäuse 14 weist eine erste Reversieröffnung (nicht dargestellt) und eine zweite Reversieröffnung 52 auf, wobei die Reversieröffnungen 52 jeweils zwischen der ersten und zweiten Ansaugöffnung 36,38 und der Ausblasöffnung 34 angeordnet sind und eine kleinere Querschnittsfläche aufweisen als die erste und zweite Ansaugöffnung 36,38. In der Betriebsposition sind die erste und die zweite Reversieröffnung 52 durch die Wandung 26 des Einsatzes 18 vollständig im Wesentlichen fluiddicht verschlossen.

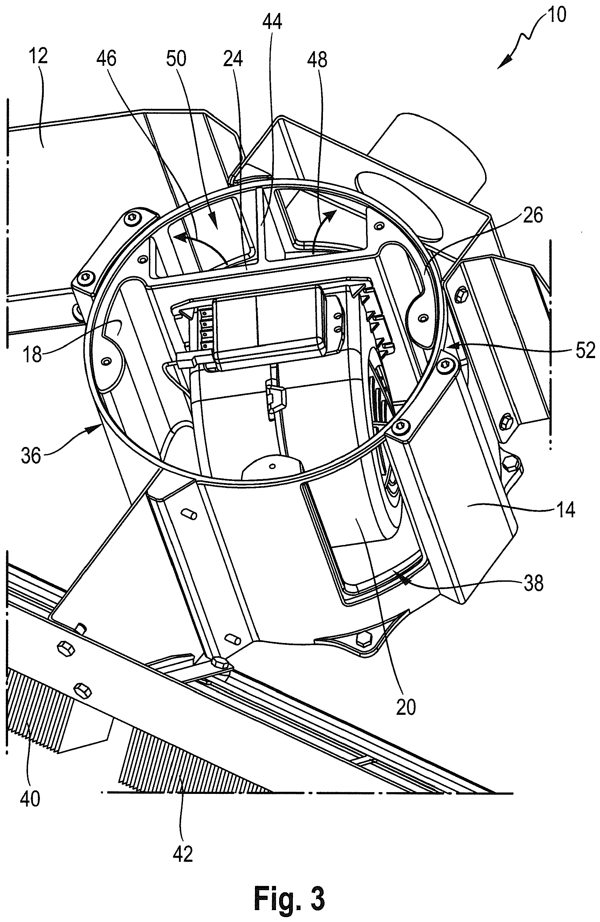

In einer in Figur 3 gezeigten ersten Reversierposition der Gebläseanordnung 10 ist der Einsatz 18 mit dem Gebläse 20 derart um seine Drehachse verschwenkt, dass die Ansaugseite 30 des Gebläses 20 über die zweite Ansaugöffnung 38 fluiddurchlässig mit dem zweiten Filterelement 42 verbunden ist. Die Druckseite 32 des Gebläses 20 ist in der ersten Reversierposition fluiddurchlässig mit der Ausblasöffnung 34 und über die ersten Reversieröffnung 50 fluiddurchlässig mit dem ersten Filterelement 40 verbunden, wobei das erste Filterelement 40 mit Druck beaufschlagt wird und entgegen der ersten Strömungsrichtung in eine zweite Strömungsrichtung von der Frischluft durchströmt wird. Durch das Umkehren der Strömungsrichtung durch das Filterelement kann das jeweilige Filterelement gereinigt werden. Druckseitig wird der durch das Trennelement 44 geteilte Luftstrom mit seinem ersten Teilluftstrom 46 durch die erste Reversieröffnung 50 zu dem ersten Filterelement 40 und der zweite Teilluftstrom 48 durch die teilweise durch die Wandung 26 des Einsatzes 20 verschlossene Ausblasöffnung 34 geleitet. Die durchströmbare Querschnittsfläche der Ausblasöffnung 34 und der ersten Reversieröffnung 50 sind im Wesentlichen gleich groß. Die erste Ansaugöffnung 36 und die zweite Reversieröffnung 52 sind durch die Wandung 26 des Einsatzes 20 im Wesentlichen fluiddicht verschlossen.

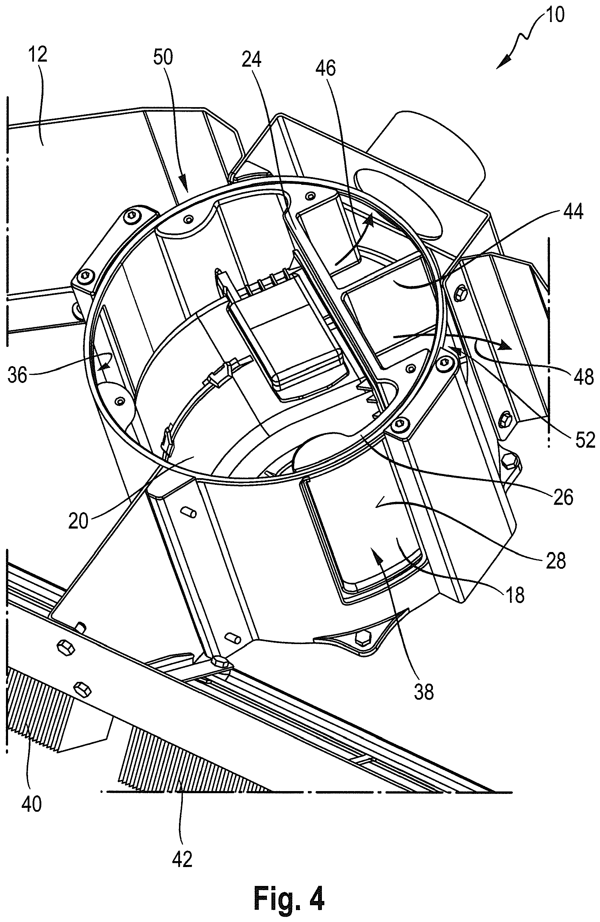

In einer zweiten Reversierposition (Fig. 4) ist der Einsatz 18 mit dem Gebläse 20 derart um seine Drehachse verschwenkt, dass die Ansaugseite 30 des Gebläses 20 über die erste Ansaugöffnung 36 fluiddurchlässig mit dem ersten Filterelement 40 verbunden ist. Die Druckseite 32 des Gebläses 20 ist in der zweiten Reversierposition fluiddurchlässig mit der Ausblasöffnung 34 und über die zweite Reversieröffnung 52 fluiddurchlässig mit dem zweiten Filterelement 42 verbunden, wobei das zweite Filterelement 42 mit Druck beaufschlagt wird und in der zweiten Strömungsrichtung durchströmt wird. Druckseitig wird der erste Teilluftstrom 46 durch die teilweise durch die Wandung 26 des Einsatzes 20 verschlossene Ausblasöffnung 34 und der zweite Teilluftstrom 48 durch die zweite Reversieröffnung 52 zu dem zweiten Filterelement 42 geleitet. Das Trennelement 44 kann radial außenseitig das Aufnahmegehäuse 14 kontaktieren. Die durchströmbare Querschnittsfläche der Ausblasöffnung 34 und der zweiten Reversieröffnung 52 sind im Wesentlichen gleich groß. Die zweite Ansaugöffnung 38 und die erste Reversieröffnung 50 sind durch die Wandung 26 des Einsatzes 20 im Wesentlichen fluiddicht verschlossen.

### Bezugszeichenliste

- 10: Gebläseanordnung
- 12: Gehäuse
- 14: Aufnahmegehäuse
- 16: Befestigungslaschen
- 18: Einsatz
- 20: Gebläse
- 22: Deckel
- 24: Halteelement
- 26: Wandung
- 28: Mantelfläche
- 30: Ansaugseite
- 32: Druckseite
- 34: Ausblasöffnung
- 36: erste Ansaugöffnung
- 38: zweite Ansaugöffnung
- 40: erstes Filterelement
- 42: zweites Filterelement
- 44: Trennelement
- 46: erster Teilluftstrom
- 48: zweiter Teilluftstrom
- 50: erste Reversieröffnung
- 52: zweite Reversieröffnung

## Patentansprüche

1. Gebläseanordnung für eine Kabinenfiltration für eine Kraftfahrzeugkabine mit mindestens einem, innerhalb eines Aufnahmegehäuses (14) angeordneten Gebläse (20) zur Erzeugung einer Druckdifferenz zwischen einer Ansaugseite (30) und einer Druckseite (32), wobei das mindestens eine Gebläse (20) in einem verschwenkbar in dem Aufnahmegehäuse (14) aufgenommenen Einsatz (18) angeordnet ist, **dadurch gekennzeichnet, dass** das Aufnahmegehäuse (14) druckseitig eine Ausblasöffnung (34) und zur fluiddurchlässigen Verbindung des Gebläses (20) mit mindestens einem ersten und einem zweiten Filterelement (40,42) mindestens eine erste und eine zweite Ansaugöffnung (36,38) aufweist, wobei der Einsatz (18) zwischen einer Betriebsposition und mindestens einer ersten Reversierposition und/oder einer zweiten Reversierposition verschwenkbar ist, wobei in der ersten und/oder der zweiten Reversierposition des Einsatzes (18) das erste und/oder das zweite Filterelement (40,42) fluiddurchlässig mit der Druckseite (32) des Gebläses (20) verbunden und mit einem Druck beaufschlagbar ist.

2. Gebläseanordnung nach Anspruch 1, **dadurch gekennzeichnet, dass** das Aufnahmegehäuse (14) mindestens eine erste und ein zweite Reversieröffnung (50,52) aufweist, über welche die Druckseite (32) des Gebläses (20) fluiddurchlässig mit dem mindestens ersten und/oder zweiten Filterelement (40,42) verbindbar ist.

3. Gebläseanordnung nach Anspruch 1 oder 2, **dadurch gekennzeichnet, dass** der Einsatz (18) kontinuierlich und/oder diskontinuierlich zwischen der Betriebsposition und/oder der ersten und/oder zweiten Reversierposition verschwenkbar ausgebildet ist.

4. Gebläseanordnung nach einem der vorherigen Ansprüche, **dadurch gekennzeichnet, dass** ein Schwenkwinkel des Einsatzes (18) von der Betriebsposition in die erste und/oder zweite Reversierposition von 15 Grad, vorzugsweise 30 Grad, besonders bevorzugt 33 Grad, bis 90 Grad, bevorzugt 60 Grad, besonders bevorzugt 45 Grad, beträgt.

5. Gebläseanordnung nach einem der vorherigen Ansprüche, **dadurch gekennzeichnet, dass** der Einsatz (18) druckseitig ein Trennelement (44) aufweist, wodurch der Luftstrom des Gebläses (20) druckseitig in einen ersten und einen zweiten Teilluftstrom (46,48) trennbar ist.

6. Gebläseanordnung nach einem der vorherigen Ansprüche, **dadurch gekennzeichnet, dass** eine Querschnittsfläche der ersten und/oder zweiten Reversieröffnung (50,52) größer, gleichgroß oder kleiner ist als eine Querschnittsfläche eines durchströmbaren Bereiches der Ausblasöffnung (34), insbesondere in der ersten und/oder zweiten Reversierposition

7. Gebläseanordnung nach einem der vorherigen Ansprüche, **dadurch gekennzeichnet, dass** die erste und/oder zweite Reversieröffnung (50,52) mit der Ausblasöffnung (34) gemeinsam ausgebildet sind.

8. Gebläseanordnung nach einem der vorherigen Ansprüche, **dadurch gekennzeichnet, dass** das Gebläse (20) ein Axialgebläse und/oder ein Radialgebläse ist.

9. Gebläseanordnung nach einem der vorherigen Ansprüche, **dadurch gekennzeichnet, dass** mindestens ein zweites Gebläse vorgesehen ist.

10. Landwirtschaftliches Kraftfahrzeug mit mindestens einer Gebläseanordnung (10) nach einem der Ansprüche 1 bis 9.

11. Verfahren zum Reinigen von mindestens einem ersten und einem zweiten Filterelement (40,42) für eine Kraftfahrzeugkabine mit einer Gebläseanordnung (10) nach einem der Ansprüche 1 bis 9, **dadurch gekennzeichnet, dass** durch Verschwenken eines Einsatzes (18) mit mindestens einem Gebläse (20) von einer Betriebsposition in eine erste und/oder zweite Reversierposition das erste und/oder zweite Filterelement mit der Druckseite (32) des Gebläses (20) verbunden wird, wobei zumindest ein Teilluftstrom (46,48) des Gebläses (20) das erste und/oder zweite Filterelement (40,42) zur Reinigung durchströmt.

12. Verfahren nach Anspruch 11, **dadurch gekennzeichnet, dass** in der ersten und/oder zweite Reversierposition ein Teilluftstrom (46,48) der Ausblasöffnung (34) zugeführt wird und dass ein Teilluftstrom (46,48) dem ersten und/oder zweiten Filterelement (40,42) zum Reinigen zugeführt wird.

13. Verfahren nach Anspruch 11 oder 12, **dadurch gekennzeichnet, dass** das Verschwenken zwischen der Betriebsposition und der ersten und/oder zweiten Reversierposition kontinuierlich und/oder diskontinuierlich erfolgt.

14. Verfahren nach einem der vorherigen Ansprüche, **dadurch gekennzeichnet, dass** die Drehzahl des mindestens einen Gebläses (20) in der ersten und/oder zweiten Reversierposition gegenüber der Betriebsposition angehoben wird.

## Claims

1. A fan arrangement for cabin filtration for a motor vehicle cabin comprising at least one fan (20) arranged within a receiving housing (14) for producing a pressure difference between a suction intake side (30) and a pressure side (32), wherein the at least one fan (20) is arranged in an insert (18) received pivotably in the receiving housing (14), **characterised in that** the receiving housing (14) has a discharge opening (34) at the pressure side and at least a first and a second suction intake opening (36, 38) for fluid-communicating connection of the fan (20) to at least a first and a second filter element (40, 42), wherein the insert (18) is pivotable between an operative position and at least a first reversing position and/or a second reversing position, wherein in the first and/or the second reversing position of the insert (18) the first and/or the second filter element (40, 42) is fluid-communicatingly connected to the pressure side (32) of the fan (20) and can be acted upon with a pressure.

2. A fan arrangement according to claim 1 **characterised in that** the receiving housing (14) has at least a first and a second reversing opening (50, 52), by way of which the pressure side (32) of the fan (20) can be fluid-communicatingly connected to the at least first and/or second filter element (40, 42).

3. A fan arrangement according to claim 1 or claim 2 **characterised in that** the insert (18) is adapted to be pivotable between the operative position and/or the first and/or second reversing position continuously and/or discontinuously.

4. A fan arrangement according to one of the preceding claims **characterised in that** a pivotal angle of the insert (18) from the operative position into the first and/or second reversing position is of 15 degrees, preferably 30 degrees, particularly preferably 33 degrees, to 90 degrees, preferably 60 degrees, particularly preferably 45 degrees.

5. A fan arrangement according to one of the preceding claims **characterised in that** at the pressure side the insert (18) has a separating element (44) whereby the air flow of the fan (20) can be separated at the pressure side into a first and a second partial air flow (46, 48).

6. A fan arrangement according to one of the preceding claims **characterised in that** a cross-sectional area of the first and/or second reversing opening (50, 52) is greater than, of the same size as, or smaller than a cross-sectional area of a region of the discharge opening (34), through which a flow can pass, in particular in the first and/or second reversing position.

7. A fan arrangement according to one of the preceding claims **characterised in that** the first and/or second reversing opening (50, 52) is provided jointly with the discharge opening (34).

8. A fan arrangement according to one of the preceding claims **characterised in that** the fan (20) is an axial fan and/or a radial fan.

9. A fan arrangement according to one of the preceding claims **characterised in that** there is provided at least one second fan.

10. An agricultural motor vehicle comprising at least one fan arrangement (10) according to one of claims 1 to 9.

11. A method of cleaning at least a first and a second filter element (40, 42) for a motor vehicle cabin having a fan arrangement (10) according to one of claims 1 to 9, **characterised in that** by pivoting an insert (18) having at least one fan (20) from an operative position into a first and/or second reversing position the first and/or second filter element is connected to the pressure side (32) of the fan (20), wherein at least a partial air flow (46, 48) of the fan (20) flows through the first and/or second filter element (40, 42) for cleaning purposes.

12. A method according to claim 11 **characterised in that** in the first and/or second reversing position a partial air flow (46, 48) is fed to the discharge opening (34) and that a partial air flow (46, 48) is fed to the first and/or second filter element (40, 42) for cleaning purposes.

13. A method according to claim 11 or claim 12 **characterised in that** the pivotal movement between the operative position and the first and/or second reversing position is effected continuously and/or discontinuously.

14. A method according to one of the preceding claims **characterised in that** the rotary speed of the at least one fan (20) is increased in the first and/or second reversing position in relation to the operative position.

## Revendications

1. Agencement de ventilateur pour une filtration de cabine pour une cabine de véhicule, comprenant au moins un ventilateur (20) disposé à l'intérieur d'un carter de logement (14) pour produire une différence de pression entre un côté admission (30) et un côté refoulement (32), le au moins un ventilateur (20) étant disposé dans un insert (18) logé de manière pivotante dans le carter de logement (14), **caractérisé en ce que** le carter de logement (14) comporte, côté refoulement, une ouverture de soufflage (34) et, pour relier le ventilateur (20) de façon perméable aux fluides à au moins un premier et un second élément de filtre (40, 42), au moins une première et une seconde ouverture d'admission (36, 38), l'insert (18) pouvant pivoter entre une position de fonctionnement et au moins une première position d'inversion et/ou une seconde position d'inversion, dans la première et/ou la seconde position d'inversion de l'insert (18) le premier et/ou le second élément de filtre (40, 42) étant reliés de façon perméable aux fluides au côté refoulement (32) du ventilateur (20) et pouvant être sollicités par une pression.

2. Agencement de ventilateur selon la revendication 1, **caractérisé en ce que** le carter de logement (14) comporte au moins une première et une seconde ouverture d'inversion (50, 52) par l'intermédiaire desquelles le côté refoulement (32) du ventilateur (20) peut être relié, de façon perméable aux fluides, au au moins premier et/ou second élément de filtre (40, 42).

3. Agencement de ventilateur selon la revendication 1 ou 2, **caractérisé en ce que** l'insert (18) est conformé avec la possibilité de pivoter de manière continue et/ou discontinue entre la position de fonctionnement et/ou la première et/ou seconde position d'inversion.

4. Agencement de ventilateur selon une des revendications précédentes, **caractérisé en ce qu'**un angle de pivotement de l'insert (18) de la position de fonctionnement à la première et/ou seconde position d'inversion est de 15 degrés, préférentiellement 30 degrés, particulièrement préférentiellement 33 degrés, jusqu'à 90 degrés, préférentiellement 60 degrés, particulièrement préférentiellement 45 degrés.

5. Agencement de ventilateur selon une des revendications précédentes, **caractérisé en ce que** l'insert comporte, côté refoulement, un élément séparateur (44) qui permet de séparer le courant d'air du ventilateur (20) côté refoulement en un premier et un second courant d'air partiel (46, 48) .

6. Agencement de ventilateur selon une des revendications précédentes, **caractérisé en ce qu'**une surface transversale de la première et/ou seconde ouverture d'inversion (50, 52) est supérieure, égale ou inférieure à une surface transversale d'une zone de l'ouverture de soufflage (34) apte à être traversée par le courant d'air, en particulier dans la première et/ou seconde position d'inversion.

7. Agencement de ventilateur selon une des revendications précédentes, **caractérisé en ce que** la première et/ou seconde ouverture d'inversion (50, 52) est ménagée conjointement avec l'ouverture de soufflage (34).

8. Agencement de ventilateur selon une des revendications précédentes, **caractérisé en ce que** le ventilateur (20) est un ventilateur axial et/ou un ventilateur radial.

9. Agencement de ventilateur selon une des revendications précédentes, **caractérisé en ce qu'**au moins un second ventilateur est prévu.

10. Véhicule agricole comprenant au moins un agencement de ventilateur (10) selon une des revendications 1 à 9.

11. Procédé pour nettoyer au moins un premier et un second élément de filtre (40, 42) pour une cabine de véhicule, comprenant un agencement de ventilateur (10) selon une des revendications 1 à 9, **caractérisé en ce que**, par pivotement d'un insert (18) comprenant au moins un ventilateur (20) depuis une position de fonctionnement vers une première et/ou seconde position d'inversion, le premier et/ou second élément de filtre est relié au côté refoulement (32) du ventilateur (20), au moins un courant d'air partiel (46, 48) du ventilateur (20) traversant le premier et/ou second élément de filtre (40, 42).

12. Procédé selon la revendication 11, **caractérisé en ce que**, dans la première et/ou seconde position d'inversion, un courant d'air partiel (46, 48) est dirigé vers l'ouverture de soufflage (34) et **en ce qu'**un courant d'air partiel (46, 48) est dirigé vers le premier et/ou second élément de filtre (40, 42) pour le nettoyer.

13. Procédé selon la revendication 11 ou 12, **caractérisé en ce que** le pivotement entre la position de fonctionnement et la première et/ou seconde position d'inversion s'effectue de manière continue et/ou discontinue.

14. Procédé selon une des revendications précédentes, **caractérisé en ce que**, dans la première et/ou seconde position d'inversion, la vitesse de rotation du au moins un ventilateur (20) est augmentée par rapport à la position de fonctionnement.
